# EUROPÄISCHE PATENTSCHRIFT

(11) **EP 0 944 511 B1**
(45) Veröffentlichungstag und Bekanntmachung des Hinweises auf die Patenterteilung: **20.07.2005**
(21) Anmeldenummer: 97954923.5
(22) Anmeldetag: 18.12.1997
(51) Int. Cl.: B60T 13/36, B60T 8/36

(54) **Druckluftbetätigte Scheibenbremse**
Compressed air disc brake
Frein à disque à air comprimé

(30) Priorität: 18.12.1996 DE 19652806
(43) Veröffentlichungstag der Anmeldung: 29.09.1999
(73) Patentinhaber: KNORR-BREMSE SYSTEME FÜR NUTZFAHRZEUGE GMBH, 80809 München (DE)
(72) Erfinder: GERUM, Eduard, 83026 Rosenheim (DE); THEISS, Armin, 94151 Mauth (DE); BAUMGARTNER, Hans, 85368 Moosburg (DE); BIEKER, Dieter, 83080 Oberaudorf (DE)
(86) Internationale Anmeldenummer: PCT/EP1997/007099
(87) Internationale Veröffentlichungsnummer: WO 1998/026968

(56) Entgegenhaltungen:
- EP-A- 0 105 219
- WO-A-92/12880
- DE-A- 1 655 103
- DE-A- 1 655 854
- DE-A- 4 032 885
- GB-A- 1 359 487

## Beschreibung

Die Erfindung betrifft eine druckluftbetätigte Scheibenbremse nach dem Oberbegriff des Anspruches 1.

Eine gattungsgemäße Scheibenbremse mit einer mechanisch arbeitender Nachstellverwicklung ist aus der DE 40 32 885 A1 bekannt. Die in dieser Schrift gezeigte Scheibenbremse für Nutzfahrzeuge hat sich an sich bewährt, wünschenswert ist jedoch eine beuliche und konstruktive Vereinfachung zur Senkung ihrer Herstellkosten. Gleiches gilt für die in der DE 16 55 103 B2 und DE-OS 16 55 854 offenbarten Bremsanlagen.

Die WO92/12880 zeigt eine hydraulisch betätigte Radbremse mit teilweise elektrisch ausfahrbaren Ventilen.

Druckluftzylinder in verschiedenen Ausführungsformen sind beispielsweise aus dem "Kraftfahrtechnischen Taschenbuch Bosch", 22. Auflage, ISBN 3-18-419122-2 bekannt. Auf S. 655 führt diese Druckschrift als bewährte Standardbeispiele Zylinder in Kolben- als auch in Membranbauart sowie kombinierte Einkammer-Federspeicherzylinder an.

Die vorstehenden Zylinder haben sich an sich ebenfalls bewährt und stellen eine im Großen und Ganzen zuverlässige Komponente des gesamten Bremssystemes dar. Die Erfindung setzt bei dieser Ausgangslage bei der Aufgabe an, das Zusammenspiel der einzelnen Komponenten der Scheibenbremse bzw. des ganzen Bremssystemes, insbesondere der Zylinder, in modeme, elektronisch geregelte, Bremsanlagen (EBS-Bremssysteme) zu überdenken und zu optimieren.

Die Erfindung löst diese Aufgabe durch de Gegenstand des Anspruches 1.

Die Erfindung realisiert eine vorteilhafte und kostengünstige Integration eines Steuermodules mit der eigentlichen Scheibenbremse, insbesondere mit deren Bremszylinder, und vereinigt damit in sinnvoller Weise bisher getrennte Bauteile (Bremszylinder oder sonstige Elemente der Scheibenbremse mit dem Steuermodul) zu einer baulichen Einheit.

Bei der Realisierung moderner elektronischer Bremssysteme hat sich in neuerer Zeit der Wunsch nach intelligenten Fahrzeugbremsen verstärkt, die sämtliche elektronische und mechanische Steuerungselemente in die Radbremse integriert (bzw. an dieser anordnet). Dies würde u.a. erheblich den Montageaufwand im Fahrzeug verringern.

Hierbei hat sich die Idee eines radbezogenen Steuermodules herauskristalisiert, welches elektronische und pneumatische Komponenten sinnvoll miteinander kombiniert. Beispielsweise ist ein derartiges Modul so ausgelegt, daß eine Druckluftleitung sowie ein elektronisches Steuerkabel zum Modul führen, wobei mit den pneumatischen und elektronischen Komponenten des Steuermodules zumindest die Funktionen "Druck in den Bremszylinder einsteuern" und "Druck erniedrigen" realisierbar sind. Dazu umfaßt das Steuermodul beispielsweise ein Relaisventil, bevorzugt mehrere dem Relaisventil vorgeschaltete Magnetventile, einen Drucksensor, einen Busanschluß, einen Druckluftanschluß usw.. Vorzugsweise sollen die Steuermodule verschiedener Räder miteinander kommunizieren können, sei es über ein Steuergerät oder direkt.

Wird nun entsprechend zur Erfindung das Steuermodul mit der Scheibenbremse und/oder dem Bremszylinder zu einem Bauelement zusammengefaßt, verringert sich der Montage- und Verkabelungsaufwand, da anstelle mehrerer getrennter Elemente nur noch ein Bauteil in den Einbauraum der Radbremse zu integrieren und einzusetzen ist.

Eine besonders bevorzugte Variante der Erfindung zeichnet sich dadurch aus, daß der Bremszylinder und die Scheibenbremse eine bauliche Einheit bilden. Diese Variante der Erfindung vereinfacht den Aufbau der Scheibenbremse weiter erheblich (und zwar ggf auch dann, wenn das Steuermodul nicht mit in die Scheibremse integriert wird). Die Integration des Steuermodules bewirkt zunächst bereits den Wegfall von ansonsten erforderlichen elektrischen und pneumatischen Verbindungsleitungen und eines zusätzlichen Gehäuses. Die zusätzliche Integration des Bremszylinders in die Bremskonstruktion führt dann noch dazu, daß eine ansonsten notwendige Verbindung zwischen den Komponenten Bremszylinder und Scheibenbremse wegfällt, die bei der Reparatur und der Montage stets auch eine zusätzliche mögliche Fehlerquelle darstellt.

Nach einer besonders bevorzugten und zweckmäßigen Variante der Erfindung ist der Bremszylinder dabei in den Bremssattel integriert. Damit kann kein Schmutz mehr in den Bremssattel eindringen, wenn der Bremszylinder gewechselt wird. Es ist vielmehr lediglich notwendig, zum Austausch des Bremszylinders einen Einsatz auszutauschen, welcher die inneren Komponenten des Bremszylinders (Kolben, Kolbenstange usw.) umfaßt. Eine zusätzliche Abdichtung entfällt und es bietet sich die Möglichkeit, den gesamten Bremseninnenraum stets nur getrockneter Druckluft aus dem Bremssytem auszusetzen, was u.a. auch die Konisionsgefahr herabsetzt. Dies wird detailierter aus der Figurenbeschreibung deutlich.

Die Erfindung schafft zudem die Möglichkeit eines standardisierten Bremszylinders, der nicht mehr verschiedenen Einsatzzwecken angepaßt werden muß. Dies gilt insbesondere dann, wenn das Steuermodul derart ausgelegt ist, daß mit ihm eine vollständige EBS-Funktion realisierbar ist Besonders vorteilhaft wirkt es sich in diesem Zusammenhang zudem aus, wenn die Nachstellung der ansonsten pneumatisch betätigten Bremse mit einem elektrischen Nachstellmotor erfolgt. Durch den elektrischen Nachstellmotor und eine geeignete Steuerungssoftware ist es zudem möglich, den Nachstellmechanismus besonders preisgünstig zu gestalten. Durch die Ausbildung des Zylinders als Kolbenzylinder ergibt sich ferner die Möglichkeit einer besonders kompakten Bauweise.

Weitere vorteilhafte Ausführungsformen der Erfindung sind den übrigen Unteransprüchen zu entnehmen.

Nachfolgend wird die Erfindung unter Bezug auf die Zeichnung näher erläutert. Es zeigt
Fig. 1A eine teilgeschnittene Ansicht eines Membran-Bremszylinders, der nicht zum Schutzumfang des Anspruchs 1 gehört.
Fig. 1B eine gegenüber Fig. 1A um 90° gedrehte schematische Ansicht analog zu Fig1A;
Fig. 2A eine teilgeschnittene Ansicht eines weiteren Ausführungsbeispiels eines Kombizylinders;
Fig. 2B eine gegenüber Fig. 1B um 90° gedrehte schematische Ansicht analog zu Fig. 2A;
Fig. 3 ein Ausführungsbeispiel einer erfindungsgemaßen Scheibenbremse mit einem integrierten Bremszylinder;
Fig. 4 eine perspektivische Ansicht eines für die Scheibenbremse aus Fig. 1 geeigneten Steuermodules;
Fig. 5 eine Draufsicht auf das Steuermodul aus Fig. 4; und
Fig. 6 eine perspektivische Ansicht des Bremssattels mit eingesetztem Steuermodul aus Fig. 4 für die Bremse nach Art der Fig. 3.

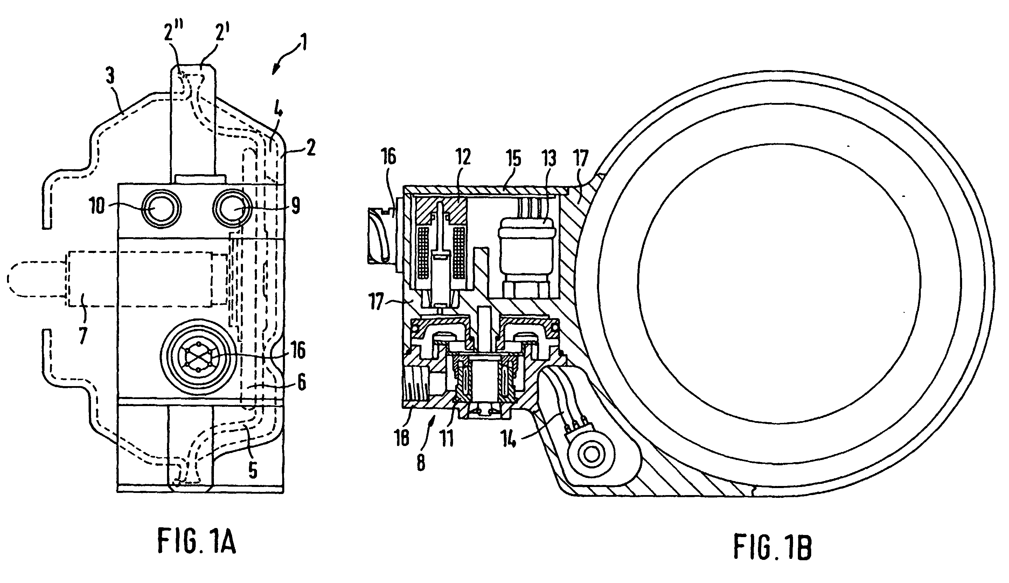

Fig. 1 zeigt einen Membran-Bremszylinder 1 für druckluftbetätigte Scheibenbremsen von Nutzfahrzeugen (siehe Anspruch 15), der im wesentlichen zwei Gehäuseabschnitte aufweist (Deckel 2 mit Verschlußabschnitt 2' und eingelegtem Sprengring 2", der einen Vorsprung 3' eines Unterteiles 3 umgreift), wobei einer der Gehäuseabschnitte - hier der Deckel 2 - einen Belüftungsraum 4 zur Druckluftzufuhr und -ableitung umschließt. Die pneumatische Betätigung des Membranzylinders erfolgt in üblicher Weise, d.h, beim Betätigen und Lösen der Bremse bewegt sich die Membran 5 mit Kolben 6 und Kolbenstange 7 hin und her. Direkt an den den Belüftungsraum verschliessenden Deckel 2 des Zylinders 1 ist ein Steuermodul 8 angeformt, welches elektronische und pneumatisch-mechanische Steuerabschnitte umfaßt, mit welchen der pneumatische Druck in den Bremszylinder einsteuerbar und in diesem absenkbar ist. Zu diesem Zwecke weist das Steuermodul 8 ferner zwei pneumatische Anschlüsse auf (9, 10), wobei der pneumatische Anschluß 9 den Bremszylinder 1 mit einer vollständigen - nach herkömmlicher Bauart ausgeführten - pneumatischen Rückfall- bzw. Rückhaltebene - verbindet (nicht dargestellt) und wobei der pneumatische Anschluß 10 die Druckluftzufuhr für das Steuermodul 8 realisiert.

Das Steuermodul 8 umfaßt hier ein Relaisventil 11, Magnetventile 12 zur Realisierung verschiedener Funktionen (von denen im Schnitt der Fig. 1 B eines erkennbar ist), einen Drucksensor 13 sowie eine Verbindung 14 zum Belagverschleißsensor der Scheibenbremse, wobei die lnformationen des Beschlagverschleißsensors und des Drucksensors 13 über einen Busanschluß an der Steckerplatte 15 zum (nicht dargestellten) Steuergerät geleitet werden, während die Steuersignale vom Steuergerät zum Steuermodul 8 über ein entsprechendes mehradriges Kabel (nicht dargestellt) zum elektrischen Stecker 16 geführt werden. Die genaue Ausgestaltung und die schaltungstechnische Verknüpfung der Pneumatik- und Elektronikelemente im Steuermodul 8 hängt vom jeweiligen Anforderungsprofil ab und kann vom Fachmann ohne weiteres beliebig realisiert werden.

Das Steuermodul weist einen zentralen Gerüstabschnitt 17 auf, der einstückig mit dem Gehäuse des Deckels 2 ausgebildet ist und der Ausnehmungen umfaßt, in welche die einzelnen Elemente des Steuermodules 8 einpassen und der zusätzlich in einfacher und vorteilhafter Weise von der Steckerplatte 15 und von einem Verschlußkörper 18 nach außen hin verschlossen wird.

Anzumerken bleibt, daß sich in Fig. 1A und 1B lediglich die pneumatische und die elektrische Steckeranordnung voneinander unterscheiden (in Fig. 1A sind "oben" die pneumatischen Anschlüsse vorgesehen, in Fig. 1B liegen diese "unten"). Eine zu Fig. 1 analoge Anordnung des Steuermodules ist im übrigen an einem Kolbenzylinder realisierbar.

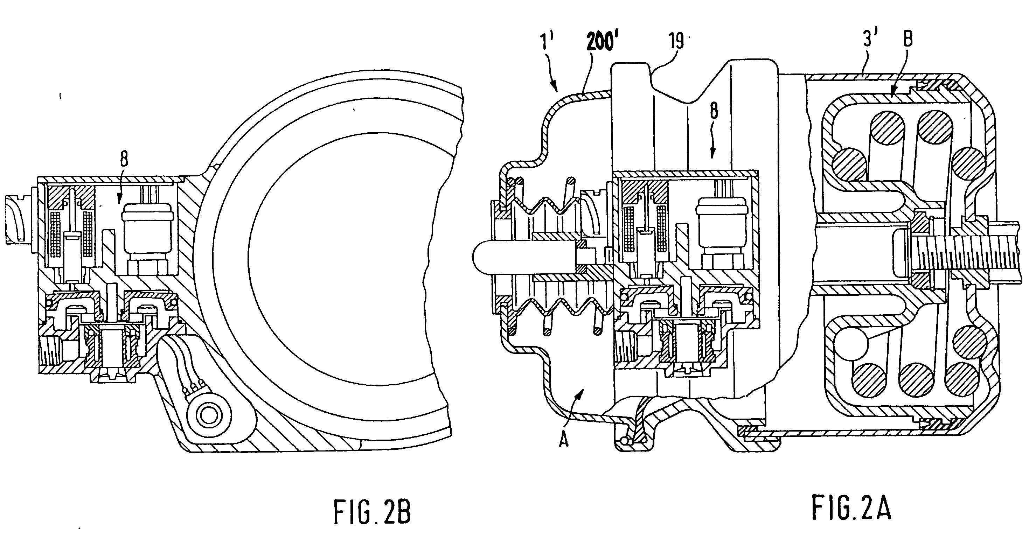

Fig. 2A und Fig. 2B zeigen einen Kombizylinder 1', der im wesentlichen aus drei Gehäuseabschnitten zusammengesetzt ist (Deckel 200', Zwischenteil 19, Unterteil 3'), wobei einer der Gehäuseabschnitte - hier das Zwischenteil 19 - den Belüftungsraum verschließt Die pneumatisch-mechanische Funktion des Kombizylinders mit Membranzylinderabschnitt A und Federspeicher-Kolbenzylinderabschnitt B muß aufgrund der Erfindung nicht gegenüber der üblichen Anordnung verändert werden. Das Steuermodul 8 ist wiederum direkt an den den Belöftungsraum verschliessenden Gehäuseabschnitt, hier den Zwischenabschnitt 17, angeformt, wobei das Steuermodul 8 in seinem funktionellem Aufbau dem Ausführungsbeispiel aus Fig. 1 entspricht. Der Hauptvorteil dieser Ausführungsform der Erfindung besteht wiederum darin, daß lediglich eine leichte Veränderung des Zwischenabschnittes 19 notwendig ist und daß die weiteren Komponenten des Zylinders 1 aufgrund der Erfindung nicht variiert werden müssen.

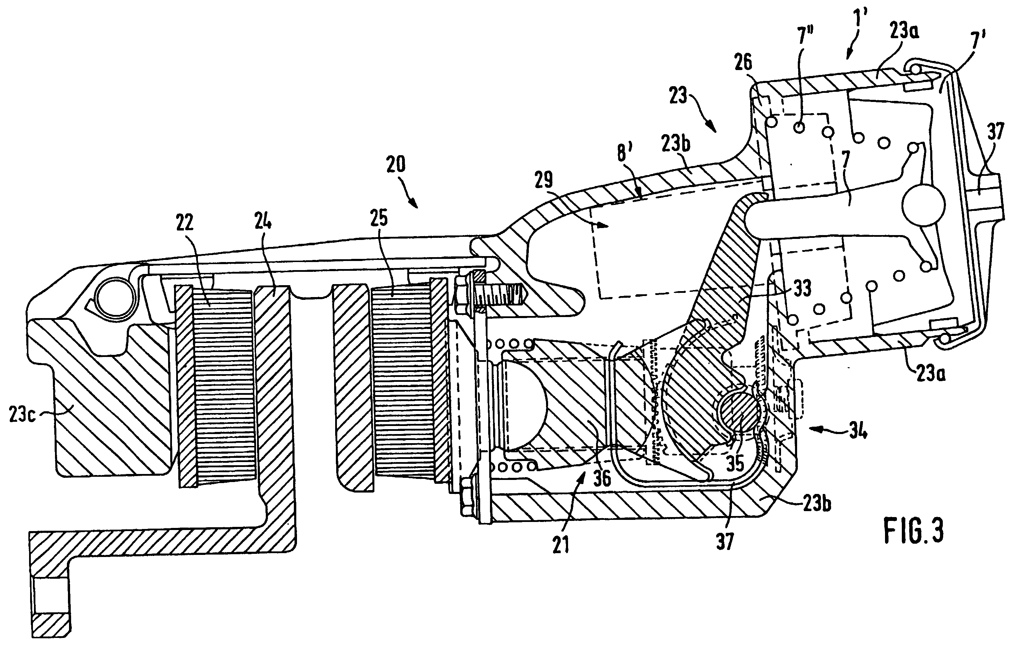

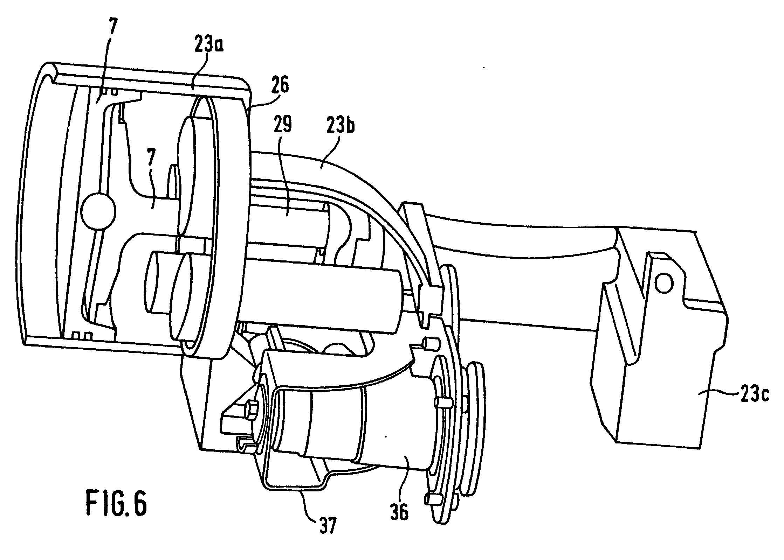

Fig. 3 zeigt eine druckluftbetätigte Scheibenbremse 20 für Nutzfahrzeuge mit einer Betätigungseinrichtung 21 zum Zuspannen von Bremsbacken 22, 25 in Richtung einer Bremsscheibe 24. Besonders vorteilhaft ist die gewählte Auslegung des Bremssattels 23 (siehe auch Fig. 6), in welchen der Bremszylinder 1' integriert ist. Der vorzugsweise einstückige Bremssattel 23 weist dazu im wesentlichen drei Teilbereiche auf: einen ersten Teilbereich 23a, welcher das äußere Gehäuse des Bremszylinders 1' bildet und der die üblichen inneren Komponenten eines Kolbenzylinders (Kolbenstange 7, Kunststoffkolben 7', Feder 7") aufnimmt, einen daran angeformten zweiten Teilbereich 23b, in welchem die Betätigungseinrichtung 21 der Scheibenbremse 20 angeordnet ist, und einen an den zweiten Teilbereich 23b angeformten dritten, die Bremsscheibe 24 und die beiden Bremsbacken 22, 25 umfassenden Teilbereich 23c, welcher zur Übertragung der Zuspannkräfte von der Betätigungsseite der Scheibenbremse (also der Seite der Betätigungseinrichtung 21) auf die Reaktionsseite dient. Alternativ wäre es auch vorstellbar, diesen dritten Teilbereich 23b nach Art eines die Bremsscheibe 24 und die Bremsbacken 22, 25 einfassenden, separaten Bandes oder Körpers auszubilden, um das Gewicht der Scheibenbremse weiter zu senken (nicht dargestellt).

Durch die Integration des Bremszylinders 1' in den Bremssattel 23 entfällt insbesondere die Notwendigkeit zur Abdichtung des die Steuereinheit aufnehmenden Zylinder-Sekundärraumes gegen den Bremseninnenraum (im Bereich 23b). Diese Abdichtung wird ersetzt durch ein selbsttätiges oder gesteuertes Entlüftungssystem des Sekundärraumes des Bremszylinders 1' und des Bereiches 23b, welches (über ein nicht dargestelltes Ventil) nachströmende Luft aus dem Druckluftsystem bezieht und abströmende Luft in die Umgebung abgibt. Hiermit ergibt sich der besonders hervorzuhebende Vorteil, daß im Bremseninnenraum stets nur getrocknete Luft (ggf, auch unter einem vorgebbaren Druck) aus der Kompressorförderung vorliegt und keine weitere Kapselung erforderlich ist. Dies ist insbesondere von Vorteil, da die verschiedenen Steuerkomponenten näßeempfindlich sein können und so gegen Feuchtigkeit sicher geschützt sind. Empfehlenswert ist ein Druck im Sekundärraum und im Bereich 23B, der um ca. 20 - 50 mbar über dem Umgebungsdruck liegt. Der gesamte Bremseninnenraum wird so auf einfache Weise sicher gegen Korrosion geschützt.

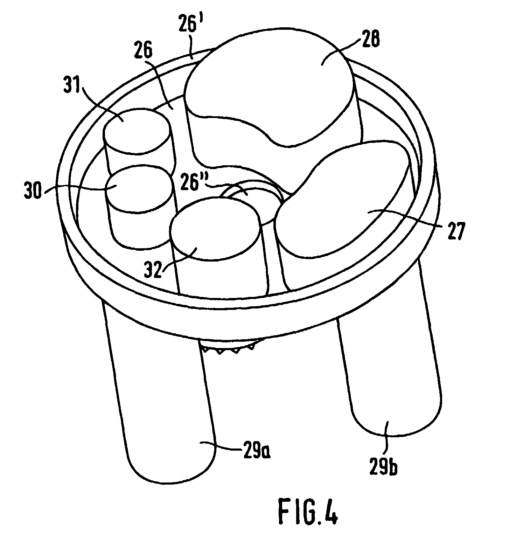

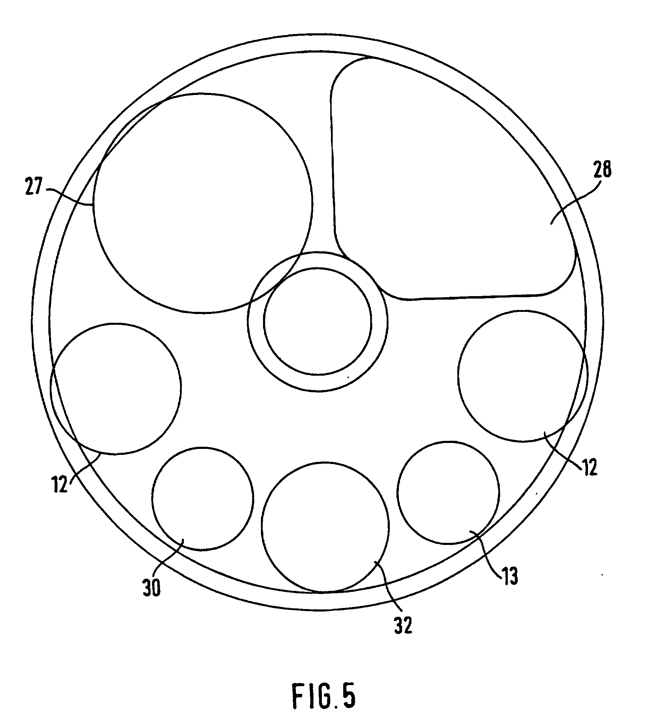

Besonders vorteilhaft ist ferner die kombinierte Integration des Steuermodules 8' (gestrichelt angedeutet) nach Art der Fig. 4 und 5 in den iersten und/oder zweiten Teilbereich des Bremssattels 23a, b und in den Bremszylinder 1'. Diese wird in überraschend einfacher Weise dadurch möglich, daß das Steuermodul 8' nach Fig. 4 eine runde Grundplatte 26 als Kunststoff-Tragkörper (mit vorkragendem Rand 26') aufweist, auf der die Einzelkomponenten des Steuermodules 8' sektorartig und funktionsweise geordnet untergebracht sind.

Bei dem Ausführungsbeispiel der Fig. 4 sind auf der Grundplatte 26 beispielsweise ein Magnetventil (z.B. ABS-Membranventil) 27, ein Auslaßschalldämpfer 28, zwei Proportionalventile 29a, b, ein Druckregelventil 30, ein Differenzdrucksensor 31 sowie ein Verschleißsensor oder ein diese Funktion erfüllender und ferner auch die Nachstellung ermöglichender, elektrischer Getriebe-Nachstellmotor 32 angeordnet. Der Nachstellmotor 32 wirkt auf den Synchronisationsantrieb zwischen den beiden Stellspindeln der zweispindligen Bremse ein (nicht eingezeichnet) und treibt beispielsweise mittels eines Zahnrades eine Synchronissationskette, einen Zahnriemen oder ein Synchronisationsgetriebe an.

Der besondere Vorteil der sektorweisen Anordnung der Einzelkomponenten nach Fig. 4 und 5, bei welcher ein mittlerer Bereich der Grundplatte 26 mit einem Loch 26" versehen ist, durch welches die Kolbenstange des Zylinders 1' führbar ist, liegt darin, daß es in überraschender Weise möglich wird, die Grundplatte 26 nebst der darauf angeordneten Komponenten derart in den ersten Teilbereich 23a (bzw. das Bremszylindergehäuse) des Bremssattels 23 einzusetzen, daß ein Teil der Einzelelmente - insbesondere die relativ langgestreckten Proportional-Magnetventile 29a, b - vom ersten Teilbereich 23a in den zweiten Teilbereich 23b hineinragen und damit einen Raum ausfüllen, der nach dem gattungsgemäßen Stand der Technik ungenutzt bleibt. Das Steuermodul wird dabei vollständig im Inneren der Bremsmechanik untergebracht und mechanisch geschützt, ohne daß sich die Abmessungen der Bremse erhöhen, Durch die zusätzliche Zusammenfassung von Bremssattel 23 und Bremszylinder 1' in Verbindung mit dem elektrischen Nachstellmotor kann zudem die sonst notwendige, rein mechanische, Nachstelleinheit entfallen und der Raumbedarf weiter reduziert werden. Der zentrale Abschnitt des zweiten Teilbereiches 23b steht dabei in gewohnter Weise (siehe die DE 40 32 885) als Raum für die Bewegung der Kolbenstange 6 des Zylinders sowie für die Bewegung eines Drehhebels 33 zur Betätigung einer Exzenterzuspannung 34 bereit. Bei dem Ausführungsbeispiel der Fig. 4 wirkt der Drehhebel allerdings nicht über die exzentrisch zur Drehhachse des Hebelendes 33' angeordnete Exzenterwelle 35 sondern direkt auf eine Zuspanntraverse 36 der zweispindlichen Bremse, wobei die Exzenterwelle 35 zur Abstützung gegen den Bremssattel 23 dient. Ein Bügel 37 hält die Betätigungseinrichtung 21 zusammen und ermöglicht so das Einsetzen der Betätigungseinrichtung 21 in den Bremssattelbereich 23b als vormontierte Einheit.

Zusammenfassend ergibt sich mit den Varianten der Fig. 1 und 2 eine Möglichkeit zur unkomplizierten Nachrüstung bestehender Scheibenbremssysteme mit einer EBS-Funktion. Nach Fig. 3 ergibt sich darüberhinaus eine standardisierbare und kostengünstige Scheibenbremse, welche äußert kompakt ist und in welche sowohl das Steuermodul als auch die Betätigungseinrichtung als vormontierte Einheiten schnell und unkompliziert integrierbar sind.

### Bezugszeichen

- Membran-Bremszylinder: 1
- Deckel: 2
- Unterteil: 3
- Belüftungsraum: 4
- Membran: 5
- Kolben: 6
- Kolbenstange: 7
- Kolben: 7'
- Feder: 7"
- Steuermodul: 8
- pneumatische Anschlüsse: 9, 10
- Relaisventil: 11
- Magnetventil: 12
- Drucksensor: 13
- Verbindung: 14
- Steckerplatte: 15
- Stecker: 16
- Gerüstabschnitt: 17
- Verschlußkörper: 18
- Zwischenteil: 19
- Membranzylinderabschnitt: A
- Federspeicher-Kolbenzylinderabschnitt: B
- Scheibenbremse: 20
- Betätigungseinrichtung: 21
- Bremsbacken: 22, 25
- Bremssattel: 23
- Bremsscheibe: 24
- Grundplatte: 26
- ABS-Membranventil: 27
- Auslaßschalldämpfer: 28
- Proportionalventile: 29a, b
- Druckregelventil: 30
- Differenzdrucksensor: 31
- Getriebe-Nachstellmotor: 32
- Drehhebel: 33
- Exzenterzuspannung: 34
- Exzenterwelle: 35
- Zuspanntraverse: 36
- Druckluftzuleitung: 37

## Patentansprüche

1. Druckluftbetätigte Scheibenbremse für Fahrzeuge, insbesondere druckluftbetätigte Scheibenbremse (20) für Nutzfahrzeuge, mit
a) einer Betätigungseinrichtung (21) zum Zuspannen von Bremsbacken (22, 25) in Richtung einer Bremsscheibe (24), und
b) einem Bremszylinder (1, 1'), welcher bei Druckluftbeaufschlagung über die Betätigungseinrichtung eine Bremsung einleitet,
**dadurch gekennzeichnet, daß**
c) in die Scheibenbremse und/oder in den Bremszylinder (1, 1') jeweils wenigstens ein Steuermodul mit elektronischen und pneumatischmechanischen Einzelkomponenten integriert ist,
d) wobei das Steuermodul ferner einen elektrischen Nachstellmotor umfaßt.

2. Druckluftbetätigte Scheibenbremse nach Anspruch 1, **dadurch gekennzeichnet, daß** der Bremszylinder (1') und die Scheibenbremse eine bauliche Einheit bilden.

3. Dructduftbetätigte Scheibenbremse nach Anspruch 1 oder 2, **gekennzeichnet durch** einen Bremssattel (23), in welchen der Bremszylinder (1') integriert ist.

4. Scheibenbremse nach Anspruch 3, **dadurch gekennzeichnet, daß** der Bremssattel (23) im wesentlichen drei Teilbereiche aufweist:
- einen ersten Teilbereich (23a), welcher das äußere Gehäuse des Bremszylinders (1') bildet,
- einen daran angeformten zweiten Teilbereich (23b), in welchem die Betätigungseinrichtung (21) angeordnet ist, und
- einen an den zweiten Teilbereich (23b) angeformten dritten, die Bremsscheibe (24) und die beiden Bremsbacken (22, 25) umfassenden Teilbereich (23c), welcher zur Übertragung der Zuspannkräfte von der Betätigungsseite auf die Reaktionsseite dient.

5. Scheibenbremse nach Anspruch 4, **dadurch gekennzeichnet, daß** das Steuermodul in den ersten und/oder zweiten Teilbereich (23a, 23b) des Bremssattels (23) integriert ist.

6. Scheibenbremse nach einem der vorstehenden Ansprüche, **dadurch gekennzeichnet, daß** das Steuermodul (8') eine Grundplatte (26) oder einen Tragkörper, vorzugsweise aus Kunststoff, aufweist, auf der/dem die Einzelkomponenten angeordnet sind.

7. Scheibenbremse nach Anspruch 6, **dadurch gekennzeichnet, daß** die Grundplatte (26) rund oder eliptisch ist und daß die Einzelkomponenten funktionsweise sektorartig auf der Grundplatte (26) angeordnet sind.

8. Scheibenbremse nach einem der Ansprüche 6 oder 7, **dadurch gekennzeichnet, daß** auf der Grundplatte (26) wenigstens ein Magnetventil (27), ein Auslaßschalldämpfer (28), zwei Schaltventile (29a, b), ein Druckregelventil (30), ein Drucksensor (31) undloder ein Verschleißsensor angeordnet sind.

9. Scheibenbremse nach nach einem der vorstehenden Ansprüche 6 bis 8, **dadurch gekennzeichnet, daß** die Grundplatte (26) derart in den ersten Teilbereich (23a) des Bremssattels (23) eingesetzt ist, daß die Einzelkomponenten zumindest teilweise vom ersten Teilbereich (23a) in den zweiten Teilbereich (23b) hineinragen.

10. Scheibenbremse nach einem der vorstehenden Ansprüche 6 bis 9, **dadurch gekennzeichnet, daß** die Einzellelemente derart auf der Grundplatte (26) angeordnet sind und in den zweiten Teilbereich (23b) hineinragen, daß ein zentraler Abschnitt des zweiten Teilbereiches (23b) als Raum für die Bewegung einer Kolbenstange (6) des Zylinders (1) sowie für die Bewegung eines Drehhebels (33) zur Betätigung einer Zuspannung (34), vorzugsweise eine Exzenterzuspannung (34), frei bleibt.

11. Scheibenbremse nach einem der Ansprüche 4 oder 5, **dadurch gekennzeichnet, daß** am Kopf des ersten Teilbereiches (23a) des Bremssattels (23) ein Druckluftanschluß und ein elektrischer Anschluß ausgebildet sind.

12. Scheibenbremse nach einem der vorstehenden Ansprüche, **dadurch gekennzeichnet, daß** an den Bremszylinder (1') ein separater Federspeicherzylinder ansetzbar ist.

13. Scheibenbremse nach einem der vorstehenden Ansprüche, **gekennzeichnet durch** ein Entlüftungssystem, vorzugsweise nach Art eines Sekundärraum-Entlüftungssystemes, welches nachströmende Luft aus einer Druckluftzuleitung (37) bezieht und abströmende Luft in die Umgebung abgibt

14. Scheibenbremse nach einem der vorstehenden Ansprüche, **dadurch gekennzeichnet, daß** der Bremszylinder als Kolbenzylinder ausgebildet ist.

## Claims

1. Air-operated disk brake for vehicles, in particular air-operated disk brake (20) for commercial vehicles, with
a) an actuating mechanism (21) for applying brake pads (22, 25) to a brake disk (24), and
b) a brake cylinder (1, 1') initiating a braking process when compressed air is applied via the actuating mechanism,
**characterised in that**
c) at least one control module with electronic and pneumatic-mechanical individual components is integrated into each disk brake and/or into the brake cylinder (1, 1'),
d) wherein the control module further incorporates an electric adjusting motor.

2. Air-operated disk brake according to claim 1, **characterised in that** the brake cylinder (1') and the disc brake form a structural unit.

3. Air-operated disk brake according to claim 1 or 2, **characterised by** a brake caliper (23) into which the brake cylinder (1') is integrated.

4. Disk brake according to claim 3, **characterised in that** the brake caliper (23) essentially comprises three subsections:
- a first subsection (23a) representing the outer housing of the brake cylinder (1'),
- a second subsection (23b) produced integral therewith, in which the actuating mechanism (21) is located, and
- a third subsection (23c) produced integral with the second subsection (23b) and comprising the brake disk (24) and the two brake pads (22, 25), which is used to transmit the application forces from the actuating side to the reaction side.

5. Disk brake according to claim 4, **characterised in that** the control module is integrated into the first and/or second subsection (23a, 23b) of the brake caliper (23).

6. Disk brake according to any of the preceding claims, **characterised in that** the control module (8') is provided with a base plate (26) or a carrier body, preferably made of plastic, on which the individual components are located.

7. Disk brake according to claim 6, **characterised in that** the base plate (26) is circular or elliptical, and **in that** the individual components are arranged in sectors on the base plate (26) according to their functions.

8. Disk brake according to claim 6 or 7, **characterised in that** the base plate (26) supports at least a solenoid valve (27), an exhaust silencer (28), two switching valves (29a, b), a pressure control valve (30), a pressure sensor (31) and/or a wear sensor.

9. Disk brake according to any of claims 6 to 8, **characterised in that** the base plate (26) is so installed into the first subsection (23a) of the brake caliper (23) that the individual components project at least partially from the first subsection (23a) into the second subsection (23b).

10. Disk brake according to any of claims 6 to 9, **characterised in that** the individual elements are so arranged on the base plate (26) and so project into the second subsection (23b) that a central section of the second subsection (23b) remains a free space for the movement of a piston rod (6) of the cylinder (1) and for the movement of a rotary lever (33) for the operation of an application device (34), preferably of an eccentric application device (34).

11. Disk brake according to claim 4 or 5, **characterised in that** a pneumatic connection and an electric connection are provided ot the head of the first subsection (23a) of the brake caliper (23).

12. Disk brake according to any of the preceding claims, **characterised in that** a separate spring brake cylinder can be mounted on the brake cylinder (1').

13. Disk brake according to any of the preceding claims, **characterised by** a bleeding system, preferably designed as a secondary chamber bleeding system, which receives air from a compressed air supply line (37) and discharges exhaust air into the environment.

14. Disk brake according to any of the preceding claims, **characterised in that** the brake cylinder is designed as a piston cylinder.

## Revendications

1. Frein à disque à air comprimé pour véhicules, notamment frein (20) à disque à air comprimé pour véhicules utilitaires, comprenant
a) un dispositif (21) d'actionnement pour appliquer des mâchoires (22, 25) de frein en direction d'un disque (24) de frein, et
b) un cylindre (1, 1') de frein, qui lorsqu'il est alimenté en air comprimé déclenche un freinage par l'intermédiaire du dispositif d'actionnement,
**caractérisé en ce que**
c) au moins un module de commande respectif, comprenant des composants individuels électroniques et mécano-pneumatiques, est intégré dans le frein à disque et/ou dans le cylindre (1, 1') de frein,
d) sachant que le module de commande comprenant en outre un moteur électrique de rattrapage de jeu.

2. Frein à disque suivant la revendication 1, **caractérisé en ce que** le cylindre (1') de frein et le frein à disque constituent une unité de construction.

3. Frein à disque suivant la revendication 1 ou 2, **caractérisé par** un étrier (23) de frein, dans lequel est intégré le cylindre (1') de frein.

4. Frein à disque suivant la revendication 3, **caractérisé en ce que** l'étrier (23) de frein comporte essentiellement trois régions partielles :
- une première région (23a) partielle, qui constitue le boîtier extérieur du cylindre (1') de frein,
- une deuxième région (23b) partielle, formée sur la première et dans laquelle est disposé le dispositif (21) d'actionnement, et
- une troisième région (23c) partielle, qui est formée sur la deuxième région (23b) partielle, qui comprend le disque (24) de frein et les deux mâchoires (22, 25) de frein et qui sert à la transmission des forces d'application du côté d'actionnement au côté de réaction.

5. Frein à disque suivant la revendication 4, **caractérisé en ce que** le module de commande est intégré dans la première et/ou la deuxième région (23a, 23b) partielle de l'étrier (23) de frein.

6. Frein à disque suivant l'une des revendications précédentes, **caractérisé en ce que** le module (8') de commande comprend une plaque (26) de base ou un corps porteur, de préférence en matière plastique, sur laquelle/lequel sont disposés les composants individuels.

7. Frein à disque suivant la revendication 6, **caractérisé en ce que** la plaque (26) de base est ronde ou elliptique, et **en ce que** les composants individuels sont disposés à la manière de secteurs, d'après leurs fonctions, sur la plaque (26) de base.

8. Frein à disque suivant la revendication 6 ou 7, **caractérisé en ce qu'**au moins un distributeur (27) électromagnétique, un amortisseur (28) d'échappement, deux distributeurs (29a, 29b) de commutation, un régulateur (30) de pression, un capteur (31) de pression et/ou un capteur d'usure sont disposés sur la plaque (26) de base.

9. Frein à disque suivant l'une des revendications 6 à 8, **caractérisé en ce que** la plaque (26) de base est installée dans la première région (23a) partielle de l'étrier (23) de frein de telle sorte que les composants individuels dépassent au moins partiellement de la première région (23a) partielle à l'intérieur de la deuxième région (23b) partielle.

10. Frein à disque suivant l'une des revendications 6 à 9, **caractérisé en ce que** les composants individuels sont disposés sur la plaque (26) de base et dépassent à l'intérieur de la deuxième région (23b) partielle de telle sorte qu'une partie centrale de la deuxième région (23b) partielle reste libre comme espace pour le déplacement d'une tige (6) de piston du cylindre (1) ainsi que pour le déplacement d'un levier (33) tournant pour l'actionnement d'un moyen (34) d'application du frein, de préférence d'un moyen (34) d'application excentrique.

11. Frein à disque suivant la revendication 4 ou 5, **caractérisé en ce qu'**un branchement d'air comprimé et un branchement électrique sont formés sur la tête de la première région (23a) partielle de l'étrier (23) de frein.

12. Frein à disque suivant l'une des revendications précédentes, **caractérisé en ce qu'**un cylindre séparé d'accumulateur à ressort peut être rapporté sur le cylindre (1') de frein.

13. Frein à disque suivant l'une des revendications précédentes, **caractérisé par** un système d'évacuation d'air, de préférence à la manière d'un système d'évacuation d'air de chambre secondaire, qui reçoit de l'air provenant en aval d'une conduite (37) d'alimentation en air comprimé et évacue l'air sortant dans l'environnement.

14. Frein à disque suivant l'une des revendications précédentes, **caractérisé en ce que** le cylindre de frein est réalisé sous forme de cylindre à piston.
